# EUROPEAN PATENT APPLICATION

(11) **EP 2 472 414 A1**
(43) Date of publication of application: **04.07.2012**
(21) Application number: 10306530.6
(22) Date of filing: 28.12.2010
(51) Int. Cl.: G06F 17/30, G06F 21/24

(54) **Method for updating a file system storage from a remote update server**

(71) Applicant: Gemalto SA, 92190 Meudon (FR)
(72) Inventor: Durand, Stéphane, 92197, MEUDON CEDEX (FR); Marseille, François-Xavier, 92197, MEUDON CEDEX (FR)

(57) **Abstract**

The invention relates to a token comprising a secure application and mass storage partitions, said mass storage partitions comprising a file system storage, said file system storage comprising areas of ordered metadata, and file content areas, characterized in that the file system storage has a structure adapted for remote partial updates.

## Description

### FIELD OF THE INVENTION

The present invention relates generally to the update of secure token and more specifically to the update of a file system storage.

### BACKGROUND OF THE INVENTION

One of the prospected markets is to supply service providers with smart tokens that act as a secure mobile front-end to their online services. These tokens embed secured internal software as well as public software to be run on a computer. The public software is generally exposed over a mass storage device in the token, mostly featured inside a file storage system such as a CDROM image.

Due to the evolution of the proposed services, and of the distributed software, it is necessary to update the content of the CDROM image, as an application on the CDROM can evolve due a bug correction, enhancements, new features, branding, etc...

A CDROM image is as a non-editable object, with file system structures that are not designed to be modified. Therefore for updating a CDROM image, it is necessary to replace all the data. It is generally known to update a CDROM image Over The Internet or Over The Air, which requires a large network bandwidth as there are a lot of data to broadcast to many devices. Such requirement leads to expensive network infrastructure.

A possible solution is to use a stock file system. Nevertheless, with a stock file system, the modifications propagate, e.g. if a table grows, all the data behind the table shift accordingly, and the references to this data accordingly are also updated in turn. This method requires more memory, and the process might be very difficult to carry out on a portable object.

There is then a need for lessen the amount of data to transport over the network in the scope of such update and thus to reduce the cost of the updating.

It is then an object of the invention to provide a new architecture of a CDROM image and a method for updating such CDROM image.

Thereto, the present invention provides a token comprising a secure application and mass storage partitions, said mass storage partitions comprising a file system storage, said file system storage comprising areas of ordered metadata, and file content areas, characterized in that the file system storage has a structure adapted for remote partial updates.

According to another aspect of the invention, the file system storage may comprise free spaces between metadata areas;

According to another aspect of the invention the file system storage may be a CDROM image;

The invention also provides a method for updating data of a file system storage from a remote update server, said file system storage being stored in a token and areas of ordered metadata, and file content areas, characterized in that it comprises updating only the most recent parts of data.

According to another aspect of the invention, the method may comprise leaving growth space between areas liable to grow during an update.

According to another aspect of the invention, the method may comprise comparing the version of data in the remote server and the version of data in the file system storage.

According to another aspect of the invention, the method may comprise relocating updated data within the file storage system if an area reaches its growth limit.

When the said CDROM image architecture and the update method are combined, it is advantageously possible to perform an update of the CDROM image that will only consider the modifications of the existing image. All information contained in the CDROM image that is invariant with respect to the prospected update will not be carried in the update bundle whereas all changing informations will be concisely described. The final benefit is savings in both server data storage and network resources.

The various aspects, features and advantages of the invention will become more fully apparent to those having ordinary skill in the art upon careful consideration of the following Detailed Description, given by way of example thereof, with the accompanying drawing described below:

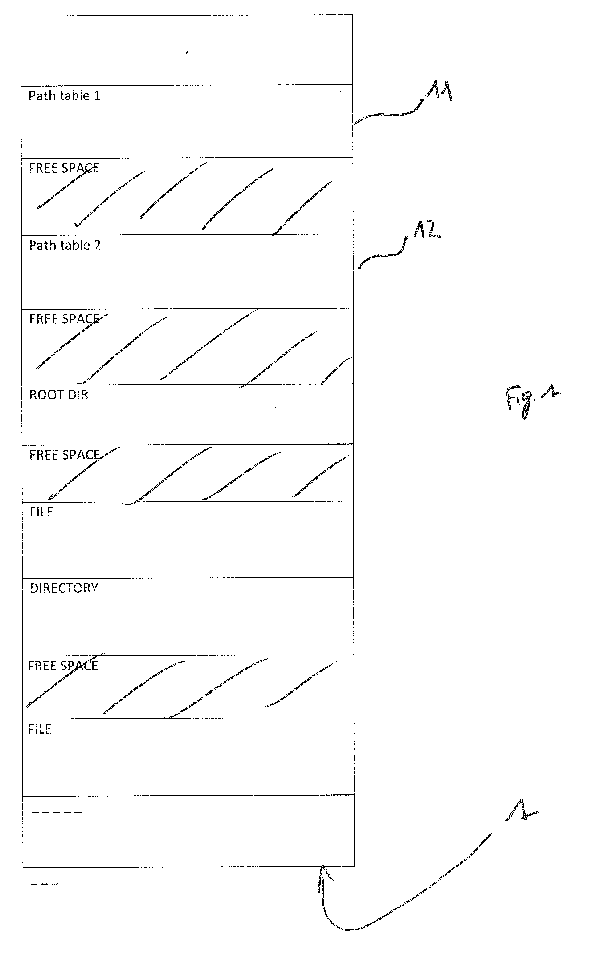

FIG.1 schematically shows an architecture of a CDROM image according to the present invention.

### DETAILED DESCRIPTION

The present invention may be understood according to the detailed description provided herein.

An USB token (not represented) features a microcontroler capable of running software and mass storage partitions. One of the mass storage partitions is a CDROM image 1 which holds public applications and data. The CDROM image access may be controled by the microcontroler or not. Some applications may embed secure mechanisms validated by the microcontroler or not.

Shown in Fig.1 is an architecture of the CDROM image 1.

The CDROM image 1 comprises several areas of ordered metadata, and file content areas.

Ordered metadata follow a certain order according to the specification of their format. Metatada are stored in two groups: the metadata relating to the paths and the metadata concerning all other information about a file such as the size, the name, dates, etc... The metadata relating to paths are ordered by name. As represented, there are two path tables 11,12.

According to the invention, the initial CDROM image 1 delivered with the token is structured to allow remote partial updates, for example by leaving growth space between all areas liable to grow during an update. Then there are free spaces between metadata areas which allows these areas to grow or shrink, and thus to be modified in regard of the global structuring of the file system.

When the update consists in adding a new file, both content and associated file metadata are concerned. Entries are added in the file system metadata area corresponding to the directory where the file is located and in the two path table 11,12.

When the update consists in deleting a file, associated metadata are concerned. Entries are removed in the directory where the file was located and in the two path tables 11,12.

When the update consists in modifying a file, new content, and, if the size is changed, the associated metadata (directory entry) are concerned. If the file grows and needs to be relocated, this is notified as the associated metadata are modified.

According to the method of the invention, only the parts that are more recent in a CDROM image are updated, i.e. only parts which are new such as new files, modified files, and the metadata accordingly modified including moved or deleted files, new directories, etc..., are transported over the network.

In an embodiment, a secure application in the USB token holds a version number associated with the CD-ROM content.

A public application allows connecting the server to the secure application, and the data exchange between the update server and the secure application.

The public application holds the address of a remote update server, which address is for example stored in the secure application. The update server holds the most recent version number and the high level description of updates from any version number to the most recent one.

Upon connection to the update server, the public application queries the version number of the CDROM from the secure application and sends it to the update server.

The update server compares the version number of the CDROM with the latest version number. If the received version number is older than the latest version number, the update server sends to the public application, high level description of the operations to perform in order to align both versions, as well as the new version number, such as delete/create directory, add/remove file, etc...

It will be well understood that the exchange between the update server and the public application may be or not encrypted and or signed.

The public application then sends the high level description to the secure application. It does not need to decrypt or verify the signature when present.

The secure application decrypts or verifies the signature of the high level description when applicable, and performs the associated operations. If no error is detected, it updates its version number to the one sent by the update server. The migration from the current version of the token is done with a new "initial" CDROM image and an updated update server that computes necessary update instead of sending the whole raw CDROM image.

It will be well understood that if an area reaches its growth limit, it can be relocated within the CDROM volume, its base address being modified in the referring structure(s).

In another embodiment, a prior step to transporting the updating data is to compute them. Based on the CDROM version in the token and the new set of file (content and tree), areas to be modified, shrunk, expanded or moved are identified, and only these data are included in the update bundle as well as instructions to apply the modifications.

The versioning system depends on the implementation, and is not described here but is advantageously designed to easily build update bundles without heavy server-side image storage overhead.

Thanks to the invention, the number of modifications on the file system during the update is limited and the modifications do not propagate.

It will be well understood that other file system storage may be updated with this method.

## Claims

1. Token comprising a secure application and mass storage partitions, said mass storage partitions comprising a file system storage, said file system storage comprising areas of ordered metadata, and file content areas, **characterized in that** the file system storage has a structure adapted for remote partial updates.

2. Token according to claim 2, **characterized in that** the file system storage comprises free spaces between metadata areas.

3. Token according to claim 1 to 2, **characterized in that** the file system storage is a CDROM image.

4. Method for updating data of a file system storage from a remote update server, said file system storage being stored in a token and areas of ordered metadata, and file content areas, **characterized in that** it comprises updating only the most recent parts of data.

5. Method according to claim 4, **characterized in that** it comprises leaving growth space between areas liable to grow during an update.

6. Method according to claim 4 to 5, **characterized in that** it comprises comparing the version of data in the remote server and the version of data in the file system storage.

7. Method according to previous claims 4 to 6, **characterized in that** it comprises relocating updated data within the file storage system if an area reaches its growth limit.
